# EUROPEAN PATENT SPECIFICATION

(11) **EP 3 625 019 B1**
(45) Date of publication and mention of the grant of the patent: **18.08.2021**
(21) Application number: 18733705.0
(22) Date of filing: 07.05.2018
(51) Int. Cl.: B29C 44/02, B29C 44/08, B29C 44/12, B33Y 80/00, B32B 13/04, B32B 13/06, B32B 13/12, B32B 13/14, B32B 15/04, B32B 15/14, B32B 27/06, B32B 27/08, B32B 27/12, B32B 27/36, B32B 27/38, B32B 27/40, B32B 3/06, B32B 3/30, B32B 5/02, B32B 5/14, B29C 44/14, E04B 1/76, E04F 13/08, B29C 44/04

(54) **METHOD FOR FABRICATING A CUSTOM BUILDING PANEL**
VERFAHREN ZUR HERSTELLUNG EINER ANPASSBAREN BAUPLATTE
PROCÉDÉ DE FABRICATION D'UN PANNEAU DE CONSTRUCTION SUR MESURE

(30) Priority: 19.05.2017 US 201762508565 P
(43) Date of publication of application: 25.03.2020
(73) Proprietor: Dow Global Technologies LLC, Midland, MI 48674 (US)
(72) Inventor: SREERAM, Attiganal, N., Midland, MI 48674 (US); WOODMAN, Daniel, S., Midland, MI 48667 (US); RADLER, Michael, J., Midland, MI 48674 (US); PARSONS, Gary, D., Midland, MI 48674 (US); BAUMANN, Robert, 8810 Horgen (CH); VENKATESAN, Jai, Midland, MI 48674 (US); BARGER, Mark, A., Midland, MI 48674 (US); COSTEUX, Stephane, Midland, MI 48674 (US); MAZOR, Michael, H., Midland, MI 48674 (US); CESARETTI, Richard, Midland, MI 48674 (US)
(74) Representative: Beck Greener LLP
(86) International application number: PCT/US2018/031298
(87) International publication number: WO 2018/213031

(56) References cited:
- EP-A2- 0 703 330
- WO-A1-2016/015993
- GB-A- 2 509 757

## Description

### BACKGROUND OF THE INVENTION

### Field of the Invention

The present invention relates to a method for fabricating a building panel.

### Introduction

Buildings typically contain multiple materials of different kinds that serve different purposes fastened together to establish a final structure. Consider, for instance, the wall of a building. A typical wall structure includes an outer façade to provide an aesthetically pleasing appearance. A wall also contains thermally insulating material to regulate temperature fluctuations inside the building as temperatures fluctuate outside. There are typically water, water vapor and air regulating components to control the permeation of moisture and air through the wall. There are also structural components to provide strength and integrity to the wall under loads of various kinds. Construction of a wall requires implementing each of these components together and fastening them in a particular order.

There are numerous challenges in constructing building structures such as walls. For instance, the mere fastening of various components together can compromise desired properties of the wall structure as a whole. For instance, mechanical fasteners such as nails and screws can provide thermal shorts through components of the wall and, if not prevented with other elements such as gasketing, can create holes through which moisture, vapor and air can penetrate. Therefore, it is desirable to have a building structure such as a wall that contains various required components adhered together without having to compromise properties of the structure by penetrating mechanical fasteners through components.

Another challenge is in the fabrication of building structures having complex shapes and/or having complex features. Building structures are not always built using planar or rectilinear articles. Curved walls or more complex shapes such as saddle-shapes and even more complex shapes originating in the imagination of skilled architects find their way into building structure designs. This seems increasing true, for instance, for art museum buildings. Fabricating these complex shapes can be incredibly challenging and often requires careful prefabrication of panels that are shipped to a construction site and pieced together. Fabrication can require extensive bending of metal and/or molding and milling of construction materials. It is desirable to simplify the process for fabricating building panels having complex shapes that deviate from planar and rectilinear. Even more desirable is the ability to fabricate building panels having complex shape at the building site; thereby allowing for last minute customization of the design as well as delivery of structure components directly from the component manufacturer/supplier without incurring fabrication and shipping costs associated with a prefabricated article (which can become expensive when comprising components such as cement slabs).

Recent developments in the building industry have included three-dimensional (3D) printing methods for manufacturing building structures. 3D printing uses multilayer deposition to build vertical structure in an article. Multilayer deposition involves depositing multiple layers of material on top of one another to create an article from the material. Multilayer deposition allows control of the vertical contour of the ultimate article by controlling when a layer includes material in a location on (or coordinate in) each planar cross section of the layer. Multilayer deposition of cement has been used to create vertical wall structures. Multilayer deposition of polymer has been used to create girder support structures. Yet, multilayer deposition has not been used to fabricate building panels of complex shapes that comprise multiple different materials or such a structure that can be customized and fabricated on the construction site.

WO2016 015 993 A1 discloses a method for fabricating a building panel according to the preamble of claim 1.

### BRIEF SUMMARY OF THE INVENTION

The present invention offers an advancement in the art of building and construction by providing a method for fabricating building structures that contain various required components adhered together without having to compromise properties of the structure by penetrating mechanical fasteners through the components and that have complex shapes. Moreover, the method can be implemented at a construction site so building structures such as wall panels can be customized and fabricated at the construction site to allow for last minute design changes and direct shipping of individual materials. The method of the present invention can fabricate façade panels comprising a façade having complex shapes adhered to foam material that can serve as thermal and acoustical barriers as well as moisture, vapor and air regulators. Moreover, the method of the present invention can fabricate entire structural panels that comprise a facade panel further comprising a structural elements or components all adhered together as one integral unit without having mechanical fasteners penetrate through the components.

The method of the present invention surprisingly benefits from the concept of additive multilayer deposition to create a sacrificial relief over which the rest of the panel is fabricated. Unlike the cement wall structures that are 3D printed, the panels of the present invention are fabricated in a horizontal orientation - that is, with the panel lying down relative to its orientation in the final completed building structure. The sacrificial relief provides a contour that molds the shape of the façade of the panel. Using multilayer deposition of sacrificial material allows creation of the sacrificial relief to any desired contour and, hence, allows creating of a multicomponent panel having any desired façade contour. Building the panel up from the sacrificial relief allows the components of the panel to be adhered to one another without requiring penetrating fasteners through the panel to attach it to a building structure.

Panels fabricated by the present invention offer advantages over other panels such as exterior insulation finishing system (EIFS) panels due to the fact that the present method builds a panel from the façade layer back instead of ending with the façade layer. As a result, a defect free façade layer is achievable using the present method of fabrication whereas one challenge in EIFS panels is achieving a defect free façade layer because the façade layer is applied over seems and defects in the underlying layer.

In a first aspect, the present invention is a method comprising the following steps: (a) building a sacrificial relief having a width dimension, a length dimension and a height dimension by an additive process of multilayer deposition of a sacrificial material, wherein the sacrificial relief can optionally define one or more than one fenestration mesa; (b) applying a façade layer over the sacrificial relief so as to conform to the contour of the sacrificial relief; (c) depositing a foamable composition over the façade layer; wherein the foamable composition expands into polymeric foam that is adhered to the façade layer and wherein the polymeric foam adheres to the façade layer.

The present invention is useful for fabricating panels for use in constructing building structures.

### BRIEF DESCRIPTION OF THE DRAWINGS

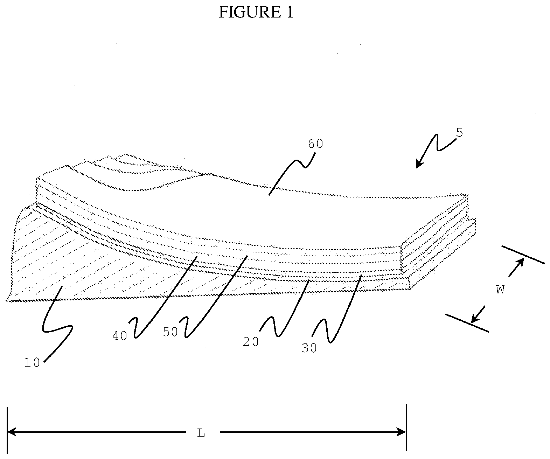

Figure 1 provides an illustration of structural facade panel 5 still residing over sacrificial relief 10 after being fabricated and prior to being removed from the sacrificial relief.

### DETAILED DESCRIPTION OF THE INVENTION

"And/or" means "and, or alternatively". "Multiple" means "more than one". Ranges include endpoints unless otherwise stated. "Particulate" means having the form of separate particles, without limitation on size or shape of the particles. Terms that end with "(s)" refer to singular and/or plural forms of the terms.

The method of the present invention requires building a sacrificial relief. The sacrificial relief has three perpendicular dimensions: width, length and height. Width and length are generally larger dimensions than the height. The height is defined by the contour of the sacrificial relief, and hence the contour of the façade produced on the sacrificial relief. The height extends in a generally vertical direction. The length and width can be the same (that is, define a square plane) or different (that is define a rectangular plane having sides of unequal length). The length can be the same or can vary across the width and/or the width can be the same or can vary across the length - that is, the sacrificial relief can have a cross sectional plane perpendicular to the height that is either rectangular or other than rectangular. The height dimension of the sacrificial relief can be essentially homogeneous (that is, defining an essentially flat contour surface) or non-homogeneous (which means it varies across the length and or width dimension of the sacrificial relief).

Desirably, the smallest width dimension of the sacrificial relief is generally one meter or more and can be two meters or more and even three meters or more, four meters or more, five meters or more six meters or more, seven meters or more eight meters or more, nine meters or more and even 10 meters or more while at the same time is generally 20 meters or less and can be 15 meters or less, 10 meters or less, five meters or less, three meters or less and even two meters or less.

Desirably, the smallest length dimension of the sacrificial relief is generally one meter or more and can be two meters or more and even three meters or more, four meters or more, five meters or more six meters or more, seven meters or more eight meters or more, nine meters or more and even 10 meters or more while at the same time is generally 20 meters or less and can be 15 meters or less, 10 meters or less, five meters or less, three meters or less and even two meters or less.

These stated limitations on length and width are not technical limitations but rather they define panels that are optimal for handling.

Height dimensions are limited only by the desired profile or contour.

Build the sacrificial relief out of sacrificial relief material using multilayer deposition. Desirably, the multilayer deposition process of building the sacrificial relief comprises depositing layers of sacrificial material in planes parallel to that containing the length and width dimension of the sacrificial relief. With layers being deposited one on top of another. In that manner, building of the sacrificial relief is done by depositing multiple layers of sacrificial material along the height dimension of the sacrificial relief.

The multilayer deposition process for building the sacrificial relief can comprise repeatedly rastering a deposition head at a given height of the sacrificial relief over the full plane defined by the width and length of the sacrificial relief at that height and depositing sacrificial material from the deposition head at those locations in that plane where sacrificial relief is desired as the rastering deposition head passes those locations and then moving to a greater height and repeating until the sacrificial relief is built. "Rastering" means to move in a pattern of continuous parallel lines adjacent to one another so as to cover an area of a plane.

The sacrificial relief material can be any material that can be organic or inorganic or a combination of organic and inorganic materials. The sacrificial relief material can be polymeric or non-polymeric. The sacrificial material can be deposited as a molten or softened polymer that hardens upon deposition. The sacrificial relief material can be deposited as particulate matter such as sand, dirt, plaster powder, cement powder, granular polymer, and metallic powder. The particulate matter can have an adhesive coating on it so that the particulates will adhere together once deposited. Generally, sacrificial relief material that is particulate matter has on average a largest individual particulate dimension of 10 millimeters (mm) or less, preferably 5 mm or less and can be 4 mm or less, 3 mm or less, 2 mm or less, one mm or less, 0.5 mm or less and at the same time is generally 0.1 mm or greater and can be 0.5 mm or greater and even one mm or greater.

Deposition of the sacrificial material can occur by concomitantly deposition of a liquid with the particulate sacrificial material. The liquid can wet the particulates and help them adhere to one another. The particulates can be of the nature that react with the liquid to cause adhesion between the particles. For example, the liquid can be water and the particulates can be cement and/or plaster particulates so that upon wetting the particulates set. Additionally or alternatively the liquid be or can contain an adhesive that binds the particulates of sacrificial material together. Examples of suitable adhesives include polyurethane and polyurethane dispersions, urea formaldehyde, epoxy, acrylics, methylene diisocyanate, cellulosic adhesives (such as methylcellulose and ethylcellulose) and combinations thereof. When the liquid contains an adhesive the particulate sacrificial material can be reactive or inert (that is, nonreactive with the liquid) and still form a bound cohesive sacrificial relief.

In this method, the sacrificial relief is made by an "additive" process in contrast to a "subtractive" process. An additive process builds up a shape by adding material where it is desired and not adding material where it is not desired. A subtractive process starts with material not only where it is desired but also where it is not desired and then removes (subtracts) material where it is not desired. Removing material is commonly done by milling, drilling, cutting, scooping and other means for taking away material.

The deposition head is any outlet that is suitable for controlled release of sacrificial material. For example, heated nozzles of various kinds are suitable as deposition heads for molten or softened polymer materials. For particulate sacrificial materials the deposition head can be a tubular or trough-like structure through which particulates are expelled. Tubular deposition heads can, for example, utilize gravity, pressurized gas (for example, air or nitrogen) or extrusion to expel particulates from the deposition head. A valve can open and close to turn on and off deposition of the sacrificial material. For trough-like deposition heads, vibration, gravity or even mechanical paddles, blades, fingers or the like can expel particulate off from the trough for deposition. For concomitant deposition of liquid with the particulates liquid can be directed onto the particulate as they fall from the deposition head by, for example spraying a mist or stream of the liquid proximate to the deposition head at the falling particulates. It is also possible to spray the liquid onto the particulates after they have been deposited in order to wet them before another layer of particulates are laid over them and this is consider "concomitantly" depositing liquid with the particulates.

Deposition of the sacrificial material can further include application of a roller, forming shoe or other shaping device to a layer of sacrificial material after it has been deposited and before a subsequent layer of sacrificial material is layered over it. Preferably, shaping with a shaping device merely moves material rather than removes material so as to retain the additive (versus subtractive) character of building the sacrificial relief. Such a step can be useful to smooth out the contour of the sacrificial material and/or further define finer features in the sacrificial relief than is physically and/or practically achievable by only deposition of sacrificial material alone. The roller or other shaping device can serve to assist in contouring the sacrificial material to achieve the desired contour for the final sacrificial relief and, if desired, can compact the sacrificial material by applying pressure. For example, applying a roller bar or forming shoe tilted out of plane from the plane of the sacrificial material layer to a deposited layer of sacrificial material can establish an angled contour to the surface of the layer. The roller can also be in the form of a ball to provide more precise shaping of a profile. Rolling a ball roller over a layer of sacrificial material can shape the layer of sacrificial material by applying pressure to the layer of sacrificial material at the point where the rolling ball contacts the layer of sacrificial material. Computer control of a ball roller that follows the deposition of the sacrificial material can precisely shape the sacrificial material to any desired contour. Ball rollers can be on a computer controlled arm and rolled over a layer of sacrificial material with pressure being applied to the sacrificial material where the ball contact the sacrificial material and pressure can be applied via the arm and can be computer controlled to match a computer aided design (CAD) image or other specific image for a contour.

The sacrificial relief can optionally be built so as to define (comprise) one or more than one fenestration mesa. A fenestration mesa is a block of sacrificial relief material that serves to define a fenestration opening in the building structure formed on the sacrificial relief. A fenestration mesa extends has the shape of the desired fenestration opening. A fenestration mesa desirably extends to a height greater than that of the building structure to be built on the sacrificial relief and the other elements are applied in the process of the present invention are desirably applied around the fenestration mesa as opposed to over the fenestration mesa.

The sacrificial relief can be made to as to include a frame around it by continuing to build up layers of sacrificial material around the perimeter of the sacrificial relief. The frame desirably is built up as high as or higher than height of the panel that will be fabricated over the sacrificial relief. When incorporating a framework as part of the sacrificial relief, the panel is fabricated within the framework, meaning within the cavity over the rest of the defined by the framework that is over the rest of the sacrificial relief. Generally, the facade layer is not deposited over the framework but if desired façade layer can be deposited up the side of the framework.

A framework of separate material can also be installed around the sacrificial relief before or after forming the sacrificial relief. Again, it is desirable for the framework to extend as high as or higher than the height of the panel being fabricated over the sacrificial relief. The panel is then fabricated within the framework over the sacrificial relief.

The method of the present invention comprises applying a façade layer over the sacrificial relief. The façade layer can be, and desirably is, applied to the sides of the fenestration mesa(s) where the sides extend generally in the height dimension. However, the façade layer is desirably not applied over the fenestration mesa(s). Also, if there is a framework around the perimeter of the sacrificial relief it is desirable not to apply façade layer over the framework. If desired, façade layer can be applied up the inside surface of the framework.

Optionally, a release coating can be applied over the sacrificial relief and or inside surface of a framework if one exists around the sacrificial relief prior to applying a façade layer over the sacrificial relief. Notably, whether or not a release coating is present between the sacrificial relief and the façade layer the façade layer is consider "over" the sacrificial relief. Release coatings serve to facilitate separation of the façade layer from the sacrificial relief. In that regard, a release coating is selected so as to have minimal adhesion to the sacrificial relief, the façade layer or both the sacrificial relief and facade layer. "Minimal adhesion" means less adhesion to the specified component than the cohesive strength of the specified component itself so that the specified component is not pulled apart when attempting to separate the façade layer from the sacrificial relief. Examples of generally suitable release coating materials include those selected from a group consisting of wax, oils, silicone materials, fluorocarbons, boron nitride, and loose powder and granular materials.

The facade layer can be anything that is desirable for an exposed façade of a building structure. For example, the façade layer can comprise any one or any combination or more than one material selected from a group consisting of polymeric film, polymeric sheet, metallic film, metallic sheet, particulate material (for example, powdered pigment, powdered metal, powdered polymer, rocks, sand, pebbles, glass beads, as well as ground up recycled inorganics such a cement, granite and brick) and cement. The particulate matter can be bound together or remain lose and unbound with respect to one another.

Apply the façade layer over the sacrificial relief desirably so as to conform to the contour of the sacrificial relief. Apply the façade layer over the sacrificial relief in any conceivable manner so as to achieve conformation to the sacrificial relief contour based on the façade layer composition. For example, sheets and/or films can be laid over the sacrificial relief to serve as the façade layer. Fluid materials and/or particulate materials can be sprayed, brushed and/or poured (cast) over the sacrificial relief to serve as the façade layer. For example, dispersions such as paint can be sprayed, brushed or wiped over the sacrificial layer to serve as a façade layer. Molten or softened polymer can be sprayed, brushed extruded over the sacrificial relief to serve as a façade layer. Cement can be, for example, brushed over, sprayed over or poured (cast) over a sacrificial relief to serve as a façade layer.

The facade layer can be a single facade layer or comprise multiple facade layers applied over one another. For example, the façade layer can comprise a paint applied first over the sacrificial relief and cement applied over the paint.

The facade layer can be homogeneous or inhomogeneous in composition. For example, a façade layer may have different colors of pigment or different textures of material, even different materials applied at different positions over the sacrificial relief. Inhomogeneous façade layers can be desirable to prepare a façade having different structural or aesthetic appearances for different portions of the facade. For example, a façade may have cementitious façade layer resembling brick in one portion and metallic or polymeric sheet resembling siding at a different location on the façade layer. As another example, a paint of one color can be applied over a portion of the sacrificial relief while a paint of a different color or a façade layer of a different material altogether can be applied over a different portion of the sacrificial relief.

The facade layer has a thickness that extends parallel to the height dimension of the sacrificial layer and extends from the surface of the façade layer most proximate to the sacrificial layer through opposing surface of the façade layer. The façade layer can have a uniform thickness or the thickness can vary within the façade layer. Whether uniform or varying, the smallest thickness of the façade layer can be as small as 250 micrometers. Generally, the thickness of the façade layer at any given location is 250 micrometer or greater and can be 500 micrometers or greater, 750 micrometers or greater, one mm or greater, two mm or greater, three mm or greater, four mm or greater and even five mm or greater and at the same time is generally 10 mm or thinner and can be nine mm or thinner, eight mm or thinner, seven mm or thinner, six mm or thinner, five mm or thinner, four mm or thinner, three mm or thinner, two mm or thinner, one mm or thinner, 750 micrometers or thinner and even 500 micrometers or thinner.

The method of the present invention comprises depositing a foamable composition over the façade layer but preferably not over any fenestration mesa(s). Desirably, the foamable composition entirely covers the façade layer. Preferably, the foamable composition is fluid. When the foamable composition is a relatively low viscosity fluid it can be poured (cast) over the façade layer and allowed to self-flow over the facade layer to cover it. More commonly, the foamable composition is a fluid of high enough viscosity (for example, that of whipped dairy topping or shaving cream)) that it cannot be poured and allowed to self-spread over the façade layer. Instead, the higher viscosity fluid foamable compositions are desirably deposited over the façade layer by expelling beads of foamable composition adjacent to one another by rastering a foam deposition head over façade layer at a given height above the façade layer so as to deposit a continuous layer of foamable composition that spans the facade layer. Upon deposition, the foamable composition expands into polymeric foam that adheres to the façade layer.

Deposition by rastering a foam deposition head over the façade layer can be used to deposit multiple layers of foamable composition over the façade layer in a multilayer deposition procedure. That is, after depositing an initial layer of foamable composition over the façade layer, another layer of foamable composition can be deposited over the initial layer of foamable composition (or the polymer foam that formed from the initial layer of foamable composition). The initial layer of foamable polymer composition expands into polymeric foam adhered to the façade layer. Subsequent layers of foamable composition expand into polymeric foam adhered to the polymeric foam over which it is applied or the polymeric foam formed from the foamable composition over which it is applied. There is no limit to the number of layers of foamable composition that can be deposited over the façade layer provided there is at least one.

Multiple layers of foamable composition can be depositing using a single foam head that first deposits a first layer of foamable composition and then deposits a second layer of foamable composition over the first layer of foamable composition, and so on until the desired number of layer is achieved. It is also possible to use multiple foam head simultaneously to deposit more than one layer of foamable composition during a single rastering process. For example, two foam heads can be offset from one another slightly so at a desired time after one foam head deposits a first bead of foamable composition the second foam head (slightly offset above and behind the first) deposits a second bead of foamable composition over the first bead of foamable composition. It is also possible to run multiple foam head next to one another to deposit multiple bead for a single layer adjacent to one another to either preclude the need for rastering by laying beads across the full width (or length) of the with multiple foam heads while depositing the bead along the length (or width) of the facade layer. It is further conceivable that multiple materials can be deposited using multiple deposition heads. For example, if cement reinforcement bars, beams, pillars, or the like are desired imbedded in the polymeric foam (or positioned around a fenestration opening (for example around a fenestration mesa) then one deposition head can extrude a concrete bead next to or above or below a bead of foamable composition all during a single deposition scan or rastering process.

One desirable benefit from multilayer deposition of foamable composition is an ability to create a foam structure having different foam properties in adjacent layers. For example, a foamable composition that expands into a relatively high density foam can be deposited as the initial layer of foamable composition over the façade layer to create a relatively strong foam layer that offers a relatively high level of water, vapor and air barrier properties. A second foamable composition that expands into a relatively lower density foam relative to the foam of the initial layer can be deposited over the initial layer to provide a polymeric foam having greater thermal insulation properties than the higher density foam from the initial layer. Such a two-layer foam structure can serve two different functions - strength and barrier properties as well as thermal insulating properties.

Any number of different combinations of foam properties can be achieved by layering different foamable compositions over one another in the method of the present invention. For instance, three or more layers of foam having different densities can be obtained by depositing different foamable compositions over one another. Density is not the only property that can vary with foam layer. Foam composition, cell size, density, color, physical properties (for example flexibility, tensile strength, compressive resistance) and thickness can all be varied by foam layer if so desired by depositing the foamable composition that expands into foam having the desired properties. One of ordinary skill can readily select foamable compositions suitable for obtaining desired properties with little experimentation.

Surprisingly, the multilayer deposition of foamable polymer composition(s) can be a continuous and automated process. For example, a computer can control the rastering of the foam deposition head for depositing each layer. Moreover, a computer can modify the foamable composition that is fed to the foam deposition head at any time. For example, a first foamable composition can be fed to the foam deposition head while the computer rasters the foam deposition head over the façade layer to deposition an initial foam layer. A computer can then switch to another tank or tanks of materials or add or subtract a feed or modify a feed rate to so as to establish a second foamable composition that is fed to the foam feed head as it begins rastering over the initial foamable composition layer. Alternatively, a computer can adjust the feed rate or pressure of the feeds from one or more feed tank to effectively create a second foamable composition rather than switch to another tank or tanks of materials to provide a second foamable composition. Likewise, a computer can modify the feed to the foam feed head when beginning to deposit a third, or any subsequent layer of foamable composition.

It is also possible to modify the foamable composition while depositing any particular layer of foamable polymer composition in order to obtain a layer of foam that has different properties at different locations over the façade layer. Modifications to the foamable composition can be made manually or by computer control for automated control at any point while rastering a foam deposition head over the façade layer or over a previously deposition layer of polymer foam or foamable composition. Additionally, or alternatively, the thickness of foamable composition in any single layer can vary in thickness at different locations. In fact, it can be desirable through the use of one or more than one layer of foamable composition to achieve an essentially planar surface to facilitate mounting of the façade panel or subsequent building or incorporating additional layers or components to the panel. Then the facade layer is non-planar it is necessary to have variable thicknesses of foamable composition (and resulting polymeric foam) in at least one foam layer to achieve an essentially planar surface.

In one embodiment, the method of the present invention further comprises applying one or more than one layer of foamable composition around at least a portion of the perimeter of the façade layer so as to define a cavity within the perimeter above another polymeric foam layer. The perimeter of the façade layer refers to the perimeter of a plane parallel to the plane containing the width and length of the façade layer. Such a cavity can later serve as a mold for pouring cement, concrete, or other material that might be desirably included in the panel. Pouring cement or concrete in the mold can desirably create a structural façade panel that has thermal insulation in the form of polymeric foam around the perimeter of the cement or concrete structural element.

Properties of the foamable polymer composition(s) used and their deposition configuration are all variables that a user can modify to achieve desired properties from the polymeric foam component of the resulting panel. For example, compositions and deposition configurations of the foamable polymer composition can be selected (in combination with a selected façade layer) so that the final building panel fully meets local building codes with respect to moisture penetration, vapor permeation, thermal conductivity or any combination thereof. Desirably, the final building panel achieves more than one-third of the thermal insulation properties required by local building code where the panel will be used.

The foamable composition is desirably selected from a group consisting of one-component polyurethane foam formulations and two-component polyurethane foam formulations. One-component polyurethane foam formulations are moisture curing formulations that comprise a blowing agent composition and are typically stored in a container under pressure prior to deposition. Upon deposition, the blowing agent expands the one-component polyurethane foam formulation and moisture in the surrounding environment reacts with the formulation to cause curing to polyurethane foam. Two-component polyurethane foam formulations comprise a polyol component and an isocyanate component that are stored separately and fed simultaneously to a deposition head where they are mixed during deposition upon which time they react to form a polyurethane. One or both of the polyol component and isocyanate component can comprise a blowing agent composition that induces foaming upon deposition. Additionally, or alternatively, a third feed of pressurized gas (for example, nitrogen or air) is fed to the deposition head and mixed with the polyol component and isocyanate component to help froth the mixture and create a foam during deposition.

Other suitable foam formulations include latex froth foam formulations. Latex froth foam formulations typically comprise a polymer latex that is frothed upon deposition, typically by entraining air with agitation. Upon deposition, the froth can dry to form a polymeric foam. Optionally, curing reactants can be present in the latex froth foam formulation that cure the polymer foam into a crosslinked polymer structure as opposed to just a coalesced polymer structure.

The polymeric foam adhered to a façade layer forms a façade panel that can be removed from the sacrificial relief and affixed to a building structure alone or in combination with other façade panels to create a full building structure facade. Additional elements can be incorporated into the façade panel before or after removing from the sacrificial relief.

For example, fibrous and/or granular material can be deposited over one or more than one layer of foamable composition. Desirably, addition of fibrous and/or granular material to a foamable composition can be done immediately after depositing the foamable composition. Desirably the fibrous and/or granular material is applied to the foamable composition prior to setting up to form a polymeric foam so as to bind the fibrous and/or granular material to the resulting polymeric foam. When embedded into polymeric foam fibrous material can serve to strengthen the polymeric foam. When bound to and exposed surface of the polymeric foam fibrous and/or granular materials can provide any one or more than one property selected from abrasion resistance, integrity, slip resistance, and aesthetic properties. Application of fibrous and/or granular material to a surface of a foamable composition can be done so as to cause partial collapse of the foam structure proximate to the surface thereby creating a densified skin on the foam that reinforces and protects the foam.

Additionally or alternatively, as another example additional elements that can be included in the building pane, mechanical fastening elements can be inserted into a layer of foamable polymer composition to facilitate affixing the façade panel to a building structure. Preferably, mechanical fastening elements are inserted into the foamable composition before it sets up into polymeric foam to avoid need for milling, drilling or otherwise breaching the polymeric foam once formed. Insertion of mechanical fastening element into foamable composition can be accomplished immediately after deposition of the foamable composition and can be an automated step that follows the foam deposition head. Mechanical fastening elements desirably are inserted at specified spacings and locations to coordinate with the locations and spacings of mating mechanical fastening elements on the building structure to which the façade panel will attach. Mechanical fastening elements inserted into the foamable composition can be, for example, selected from a group consisting of protruding fasteners and objects that define a cavity (for example, a keyhole notch or other hole into which a mating protruding fastener can insert). Examples of protruding mechanical fasteners include rods, hooks, brackets and pins and can have of any imaginable shape. Protruding mechanical fasteners extend out from the surface of the foamable composition and the resulting polymeric foam. Protruding mechanic fastener are typically designed to extend into a mating hole or cavity or to take hold of another element (such as a hook taking hold of a wire or other feature). Examples of mechanical fasteners in the form of objects that define a cavity include cups that can have lip(s) defining a specific size and/or shape of opening into the cup that are inserted into the foamable composition so that the cup is embedded into the resulting polymeric foam the lip(s) proximate to the surface of the polymeric foam with the opening defined by the lip(s) exposed. These types of mechanical fasteners are designed to receive mating protruding fasteners that penetrate into the opening. For instance, a bolt or pin on a building structure can extend through the opening defined by the lip(s) of a fastener in the polymeric foam.

Additionally, or alternatively, to adding mechanical fastening elements and/or granular or fibrous material, one or more than one structural support component can be added to the façade panel to provide greater strength and structural stability to the panel thereby creating a "structural façade panel". Structural façade panels can conceivable stand alone as building wall sections, floor sections, and/or roof sections depending on the choice of design and components of the structural façade panel. Preferably, in forming a structural façade panel structural support components are added to foamable polymer composition prior to the foamable polymer composition setting up to form polymeric foam so that the resulting foamable composition bonds to the structural support components as it sets up to form polymeric foam. One or more than one layer of foamable composition can be applied after adding one or more than one structural support component. In fact, one or more than one structural support component can be set on the façade layer prior to depositing any foamable composition over the façade layer.

Examples of structural support components that can be used in the practice of the presently claimed invention include reinforcing bars (for example, "rebar"), studs, joists, fabrics, meshes, non-woven materials, building frames comprising studs, girts, purlins, beams, columns and concrete slabs.

Concrete, preferably polymer concrete, can be cast or deposited by any method over the polymeric foam to form a concrete slab structural member as part of the panel. Polymer concrete is particularly desirable for achieving bonding to the polymeric foam. Polymer concrete is polymer based concrete and includes epoxy based concrete, polyester based concrete and polyurethane based concrete. Polyurethane based concrete is particularly desirable for use over polyurethane foam. When applying the concrete it is desirable to apply the concrete to a thickness that is generally 2.5 centimeter or more, and can be 3 centimeter or more, 4 centimeter or more even 5 centimeters or more while at the same time is generally 12 centimeters or less, or 11 centimeters or less and can be 10 centimeters or less, 9 centimeters or less, 8 centimeters or less, 7 centimeters or less, 6 centimeters or less and even 5 centimeters or less.

Once fabrication is complete, the resulting panel can be removed from the sacrificial relief to provide a façade panel, or a structural façade panel if it comprises structural support elements. The façade panel or structural façade panel can them be incorporated into a building structure to provide in a single customized panel multiple required properties for the building structure including shape, façade appearance, thermal insulation, moisture/vapor/air barrier properties and even structural properties.

The present method provides tremendous flexibility in the properties of façade panels and structural façade panels. The method of manufacturing the faces panel and structural façade pane allows flexibility in selecting foam layer composition as well as physical properties, façade layer characteristics and properties and allows for incorporating structural elements and fasteners. Moreover, the method can be utilized on a job site to custom fabricate façade panels and structural façade panels that meet immediate needs at the job site. Such an ability and flexibility allows for modifying the composition of the final building panel to meet local building code requires as well as desired aesthetic and performance characteristics for each article at each job.

The façade panels and structural façade panels of the present invention have components that are adhered to one another without requiring mechanical fasteners that penetrate through one or more than one layer of the panel. Therefore, thermal and acoustical bridges through the panel caused by mechanical fasteners penetrating through the panel are avoided. Likewise, breaches in properties such as water, vapor and air barrier properties caused by penetrating through layers of the panel are avoided. Yet the method provides façade panes and structural façade panels having desired properties of multiple component in a single panel that can be readily fabricated to custom designs even at a job site.

### Example 1

Figure 1 provides an illustration of structural façade panel **5** still residing over sacrificial relief **10** after being fabricated and prior to being removed from the sacrificial relief.

Prepare sacrificial relief **10** having a curved sloping contour having a width (direction across the curve, **W)** of two meters, a length (dimension in which the curve occurs, **L)** of four meters, height and the tallest end of 17 centimeters and height at the lowest end of two centimeters as shown in Figure 1.

Prepare the sacrificial façade by multilayer deposition of sand (80 mesh) bound together using methylcellulose solution sprayed over the sand particle after deposition. Deposit the sand particles by feeding them from a hopper into a print head that concomitantly sprays the sand with methylcellulose solution upon deposition. A suitable print head is a trough, preferably a vibrating trough, that is fitted underneath with one or more than one spray nozzle that sprays methylcellulose solution onto the sand either as it falls or once it has landed on the sacrificial relief so as to achieve a layer of sand particles wetted with methylcellulose solution on the sacrificial relief as the relief is being built. Use a 10 centimeter wide trough to deposit a 10 centimeter wide layer of sand. The wider or narrower trough can be used. Raster the print head either across the width or across the length of the sacrificial relief dimensions and deposit sand only where desired to create the profile of the sacrificial relief. Computer control of the location of the print head and sand deposition rate is used to build the proper contour.

Notably, sand wetted with just water and even sand without being wetted should also work to form the sacrificial relief.

To achieve finer resolution of the contour surface, a roller can be applied over the final sacrificial relief surface to smooth out the surface prior to drying of the methylcellulose binder. The roller can be a roll bar that is drawn along the length of the sacrificial relief with pressure being applied as determined by computer control to match the desired contour. Alternatively, a computer controlled ball roller can be used to smooth out the contour by applying computer controlled pressure. A ball roller can be translated in any dimension(s) on the sacrificial relief because it applies a force to essentially a point on the surface. A ball roller can also be used directly following the print head to help shape individual layers of sand as they are deposited. It is preferred to allow the surface of the sacrificial relief to dry prior to proceeding, though it is not absolutely necessary.

Spray a silicone release material (for example, Dow corning 200 Silicone fluid) over the surface of sacrificial relief **10** to form release layer **20.**

Spray an acrylic elastomer coating (for example, Mule-Hide A-300-FF Fast Film Finish, available from Mule-Hide Products) over the release layer **20** to achieve a façade layer **30** having a dry thickness of 0.25 millimeters.

Deposit a low pressure two-component polyurethane foam foamable composition (for example, from a FROTHPAK™ Ultra kit) over the façade layer using a FROTHPAK Ultra Hose Kit Assembly, which includes a dispensing tip to form a first layer of foamable composition. FROTHPAK is a trademark of The Dow Chemical Company. Dispose beads of the foamable composition using the following flow rates: 2.0 kilograms per minute for component A (isocyanate), 2.0 kilograms per minute for component B (polyol) and 0.005 kilograms per minute for component C (frothing agent, air). Dispose the foamable composition by spraying beads of foamable composition in adjacent lines next to one another by rastering the dispensing tip back and forth across the façade layer. The resulting foam layer **40** has a thickness of 2.5 centimeters and an average density of 60 kilograms per cubic meter. Foam layer **40** inherently adheres to façade layer **30.**

Deposit a second two-component polyurethane foam foamable composition (for example, from a FROTHPAK™ Ultra kit) over the first layer of foamable composition in like manner as the first layer, except use a flow rate for component C (frothing agent, air) that is 0.01 kilograms per minute to achieve a lower density foam and deposit the bead of foamable composition more slowly to achieve a thicker bead. The resulting foam layer **50** has a thickness of 10 centimeters and an average density of 30 kilograms per cubic meter. Foam layer **50** adheres inherently to foam layer **40.**

Over foam layer **50** apply a polyurethane concrete formulation by nozzle extrusion to achieve a structural member layer **60** of concrete that is 10 centimeters thick. The polyurethane concrete formulation adheres to the foam layer **50** due to the polyurethane binder component in the concrete formulation.

The resulting structural façade panel **5** can be removed from sacrificial relief 10 and incorporated into a building structure as, for example, a wall component.

This example illustrates how to use the method of the present invention to prepare a structural façade panel having an arched or curved contour. A similar procedure can be used to prepare structural face panels of any contour simply by modifying the contour of the sacrificial relief. If only a façade panel is desired then structural member layer **60** can be left out of the fabrication.

### Example 2

Prepare Example 2 in like manner as Example 1 except: (a) do not apply a release layer over the sacrificial relief; and (b) instead of using an acrylic elastomeric coating as the façade layer apply aluminum foil (0.04 millimeters thick) over the sacrificial relief to serve as the façade layer. Example 2 demonstrates a panel that is prepared without requiring a release layer and using a sheet-type façade layer.

## Claims

1. A method comprising the following steps:
b. applying a facade layer (30);
c. depositing a foamable composition over the facade layer; wherein the foamable composition expands into polymeric foam (40) that is adhered to the facade layer and wherein the polymeric foam adheres to the facade layer;
**characterized in that** the method further comprises a step
a. building a sacrificial relief (10) having a width dimension, a length dimension and a height dimension by an additive process of multilayer deposition of a sacrificial material, wherein the sacrificial relief can optionally define one or more than one fenestration mesa;
and **in that** in step b. the facade layer is applied over the sacrificial relief so as to conform to the contour of the sacrificial relief.

2. The method of Claim 1, wherein the smallest width dimension of the sacrificial relief is one meter and the smallest length dimension of the sacrificial relief is one meter.

3. The method of any one previous Claim, wherein each layer of deposition extends in the width and length dimension of the sacrificial relief and building of the sacrificial relief comprises depositing multiple layers of sacrificial material along the height dimension of the sacrificial relief.

4. The method of any one previous Claim, wherein the sacrificial material is selected from a group consisting of unbound particulates and bound particulates.

5. The method of any one of claims 4, wherein building of the sacrificial relief further comprises applying a roller or other shaping device to the sacrificial material after depositing the sacrificial material to assist in contouring the sacrificial material.

6. The method of any one previous Claim, wherein the method further comprises applying a release coating (20) over the sacrificial relief prior to applying a façade layer over the sacrificial relief.

7. The method of any one previous Claim, wherein the façade layer is applied as a liquid, continuous solid film, as a particulate material or any combination thereof.

8. The method of any one previous Claim, wherein the foamable composition is selected from one component and two component polyurethane foam formulations that expand and cure to form polyurethane foam.

9. The method of any one previous Claim, wherein depositing foamable composition comprises depositing multiple layers (40, 50) of foamable composition one over another.

10. The method of Claim 9, wherein subsequent layers of foamable composition have different compositions.

11. The method of any one previous Claim, wherein the method further comprises inserting mechanical fastening elements into the foamable composition after deposition onto the façade layer, the mechanical fastening objects selected from a group consisting of objects that protrude from and objects that define a cavity within the foamable composition and polymeric foam formed therefrom.

12. The method of any one previous Claim, wherein the method further comprises depositing fibrous materials onto at least a portion of the foamable composition immediately after depositing the foamable composition.

13. The method of any one previous Claim, wherein the method further comprises imbedding into the foamable composition a structural support component so that the foamable composition forms a polymeric foam bound to the structural support component.

14. The method of any one previous Claim, further comprising removing the sacrificial relief from the façade layer.

15. The method of any one previous Claim, wherein a framework is present around the perimeter of the sacrificial relief that extends higher than the panel fabricated over the sacrificial layer and wherein the façade layer and foamable composition layer(s) are within the framework.

## Patentansprüche

1. Ein Verfahren, das die folgenden Schritte beinhaltet:
b. Aufbringen einer Fassadenschicht (30);
c. Ablagern einer schäumbaren Zusammensetzung auf der Fassadenschicht; wobei die schäumbare Zusammensetzung zu Polymerschaum (40), der an der Fassadenschicht haftet, expandiert und wobei der Polymerschaum an der Fassadenschicht haftet;
**dadurch gekennzeichnet, dass** das Verfahren ferner einen folgenden Schritt beinhaltet:
a. Bauen eines Opferreliefs (10), das eine Breitenabmessung, eine Längenabmessung und eine Höhenabmessung aufweist, durch einen additiven Prozess der mehrschichtigen Ablagerung eines Opfermaterials, wobei das Opferrelief optional eine oder mehr als eine Öffnungsmesa definieren kann;
und dass in Schritt b. die Fassadenschicht auf dem Opferrelief aufgebracht wird, um der Kontur des Opferreliefs zu entsprechen.

2. Verfahren gemäß Anspruch 1, wobei die kleinste Breitenabmessung des Opferreliefs einen Meter beträgt und die kleinste Längenabmessung des Opferreliefs einen Meter beträgt.

3. Verfahren gemäß einem der vorhergehenden Ansprüche, wobei sich jede Ablagerungsschicht in der Breiten- und Längenabmessung des Opferreliefs erstreckt und das Bauen des Opferreliefs das Ablagern mehrerer Schichten Opfermaterial entlang der Höhenabmessung des Opferreliefs beinhaltet.

4. Verfahren gemäß einem der vorhergehenden Ansprüche, wobei das Opfermaterial aus einer Gruppe ausgewählt ist, die aus ungebundenen Partikeln und gebundenen Partikeln besteht.

5. Verfahren gemäß einem der Ansprüche 4, wobei das Bauen des Opferreliefs nach dem Ablagern des Opfermaterials ferner das Aufbringen einer Walze oder einer anderen Formgebungsvorrichtung auf das Opfermaterial beinhaltet, um das Nachformen des Opfermaterials zu unterstützen.

6. Verfahren gemäß einem der vorhergehenden Ansprüche, wobei das Verfahren vor dem Aufbringen einer Fassadenschicht auf dem Opferrelief ferner das Aufbringen einer Trennbeschichtung (20) auf dem Opferrelief beinhaltet.

7. Verfahren gemäß einem der vorhergehenden Ansprüche, wobei die Fassadenschicht als eine Flüssigkeit, als ein kontinuierlicher Feststofffilm, als ein Partikelmaterial oder eine beliebige Kombination davon aufgebracht wird.

8. Verfahren gemäß einem der vorhergehenden Ansprüche, wobei die schäumbare Zusammensetzung aus Einkomponenten- und Zweikomponentenpolyurethanschaumformulierungen ausgewählt ist, die expandieren und härten, um Polyurethanschaum zu bilden.

9. Verfahren gemäß einem der vorhergehenden Ansprüche, wobei das Ablagern einer schäumbaren Zusammensetzung das Ablagern mehrerer Schichten (40, 50) schäumbarer Zusammensetzung übereinander beinhaltet.

10. Verfahren gemäß Anspruch 9, wobei nachfolgende Schichten schäumbarer Zusammensetzung unterschiedliche Zusammensetzungen aufweisen.

11. Verfahren gemäß einem der vorhergehenden Ansprüche, wobei das Verfahren ferner das Einfügen mechanischer Befestigungselemente in die schäumbare Zusammensetzung nach der Ablagerung auf der Fassadenschicht beinhaltet, wobei die mechanischen Befestigungsobjekte aus einer Gruppe ausgewählt sind, die aus Objekten, die aus der schäumbaren Zusammensetzung und dem daraus gebildeten Polymerschaum herausragen, und Objekten, die einen Hohlraum darin bilden, besteht.

12. Verfahren gemäß einem der vorhergehenden Ansprüche, wobei das Verfahren ferner das Ablagern von Fasermaterialien auf mindestens einem Teil der schäumbaren Zusammensetzung direkt nach dem Ablagern der schäumbaren Zusammensetzung beinhaltet.

13. Verfahren gemäß einem der vorhergehenden Ansprüche, wobei das Verfahren ferner das Einbetten einer strukturellen Stützkomponente in die schäumbare Zusammensetzung beinhaltet, sodass die schäumbare Zusammensetzung einen an die strukturelle Stützkomponente gebundenen Polymerschaum bildet.

14. Verfahren gemäß einem der vorhergehenden Ansprüche, ferner beinhaltend das Entfernen des Opferreliefs von der Fassadenschicht.

15. Verfahren gemäß einem der vorhergehenden Ansprüche, wobei um den Umfang des Opferreliefs herum eine Rahmenanordnung vorhanden ist, die sich höher erstreckt als die auf der Opferschicht gefertigte Platte, und wobei sich die Fassadenschicht und die Schicht(en) schäumbarer Zusammensetzung innerhalb der Rahmenanordnung befinden.

## Revendications

1. Un procédé comprenant les étapes suivantes :
b. application d'une couche formant façade (30) ;
c. dépôt d'une composition moussable par-dessus la couche formant façade ; la composition moussable se dilatant en une mousse polymère (40) qui est adhérée à la couche formant façade et la mousse polymère adhérant à la couche formant façade ;
**caractérisé en ce que** le procédé comprend en outre une étape de
a. construction d'un relief sacrificiel (10) ayant une dimension de largeur, une dimension de longueur et une dimension de hauteur par un processus additif de dépôt multicouche d'un matériau sacrificiel, le relief sacrificiel pouvant facultativement définir une ou plus d'une mesa de fenêtrage ;
et **en ce que** à l'étape b., la couche formant façade est appliquée par-dessus le relief sacrificiel de façon à se conformer au contour du relief sacrificiel.

2. Le procédé de la revendication 1, dans lequel la dimension de largeur la plus petite du relief sacrificiel est d'un mètre et la dimension de longueur la plus petite du relief sacrificiel est d'un mètre.

3. Le procédé d'une revendication précédente quelconque, dans lequel chaque couche de dépôt s'étend dans la dimension de largeur et de longueur du relief sacrificiel et la construction du relief sacrificiel comprend le dépôt de couches multiples de matériau sacrificiel le long de la dimension de hauteur du relief sacrificiel.

4. Le procédé d'une revendication précédente quelconque, dans lequel le matériau sacrificiel est sélectionné parmi un groupe constitué de particules non liées et de particules liées.

5. Le procédé de l'une quelconque des revendications 4, dans lequel la construction du relief sacrificiel comprend en outre l'application d'un rouleau ou d'un autre dispositif de façonnage sur le matériau sacrificiel après le dépôt du matériau sacrificiel afin de faciliter la délimitation du contour du matériau sacrificiel.

6. Le procédé d'une revendication précédente quelconque, le procédé comprenant en outre l'application d'un revêtement antiadhésif (20) par-dessus le relief sacrificiel avant l'application d'une couche formant façade par-dessus le relief sacrificiel.

7. Le procédé d'une revendication précédente quelconque, dans lequel la couche formant façade est appliquée sous forme d'un liquide, sous forme d'un film solide continu, sous forme d'un matériau particulaire ou de n'importe quelle combinaison de ceux-ci.

8. Le procédé d'une revendication précédente quelconque, dans lequel la composition moussable est sélectionnée parmi des formulations de mousse de polyuréthane à un composant et à deux composants qui se dilatent et durcissent afin de former une mousse de polyuréthane.

9. Le procédé d'une revendication précédente quelconque, dans lequel le dépôt de la composition moussable comprend le dépôt de couches multiples (40, 50) de composition moussable l'une par-dessus l'autre.

10. Le procédé de la revendication 9, dans lequel des couches subséquentes de composition moussable ont des compositions différentes.

11. Le procédé d'une revendication précédente quelconque, le procédé comprenant en outre l'insertion d'éléments de fixation mécaniques dans la composition moussable après le dépôt sur la couche formant façade, les objets de fixation mécaniques étant sélectionnés dans un groupe constitué d'objets qui font saillie d'une cavité et d'objets qui définissent une cavité à l'intérieur de la composition moussable et de la mousse polymère formée à partir de celle-ci.

12. Le procédé d'une revendication précédente quelconque, le procédé comprenant en outre le dépôt de matériaux fibreux sur au moins une portion de la composition moussable immédiatement après le dépôt de la composition moussable.

13. Le procédé d'une revendication précédente quelconque, le procédé comprenant en outre le noyage dans la composition moussable d'un composant de support structural de sorte que la composition moussable forme une mousse polymère liée au composant de support structural.

14. Le procédé d'une revendication précédente quelconque, comprenant en outre le retrait du relief sacrificiel de la couche formant façade.

15. Le procédé d'une revendication précédente quelconque, dans lequel une charpente est présente autour du périmètre du relief sacrificiel qui s'étend plus haut que le panneau fabriqué par-dessus la couche sacrificielle et dans lequel la couche formant façade et la(les) couche(s) de composition moussable sont à l'intérieur de la charpente.
